# EUROPEAN PATENT SPECIFICATION

(11) **EP 1 347 597 B1**
(45) Date of publication and mention of the grant of the patent: **10.05.2006**
(21) Application number: 03251009.1
(22) Date of filing: 19.02.2003
(51) Int. Cl.: H04L 12/18, H04L 12/56

(54) **Embedded system having multiple data receiving channels**
Eingebettetes System mit mehreren Kanälen zum Empfang von Daten
Système intégré avec plusieurs canaux pour la réception de données

(30) Priority: 11.03.2002 US 95191
(43) Date of publication of application: 24.09.2003
(73) Proprietor: Hewlett-Packard Company, Palo Alto, CA 94304 (US)
(72) Inventor: Fidler, Mark W., Granite Bay, CA 95746 (US); Smith, David B., Loomis, CA 95650 (US); Holmes, John R,, Rocklin, CA 95677 (US)
(74) Representative: Jackson, Richard Eric

(56) References cited:
- EP-A- 0 847 168
- WO-A-98/44686
- US-A- 5 793 978
- US-B1- 6 185 185
- US-B1- 6 363 075
- HAUNG Y R ET AL: "A HIGH-PERFORMANCE INPUT ACCESS SCHEME FOR ATM MULTICAST SWITCHING" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 2, 23 June 1996 (1996-06-23), pages 1035-1039, XP000625929 ISBN: 0-7803-3251-2

## Description

### FIELD OF INVENTION

The present invention generally relates to network devices, and more particularly to an embedded system in a communication network having dedicated data receiving channel for broadcast data.

### BACKGROUND

Computing systems with constrained resources are becoming very common in environments in which communications with one or more other devices are required. Frequently, these systems are referred to as embedded systems. They are typically limited in functionality, and have fewer resources than a typical personal computer, i.e., limited processing capability, memory size and speed of internal bus structures, for example.

In a communication network environment, the embedded systems typically have a single processor and a memory for the processing of network data as well as the specific functions that they perform. A print server in a local area network (LAN) is an example of an embedded system in a network. Generally, data coming in from the network can be lumped into two categories, broadcast and non-broadcast. Non-broadcast data is characterized as being sent to a particular node where an embedded system is logically located. Broadcast data, on the other hand, refers to data sent to a group of nodes or all nodes on the network.

As more and more nodes are added to the network, broadcast data traffic increases, thus making it difficult for the embedded systems to receive and process the increased data flow from the network, particularly the non-broadcast data necessary for performing the particular functions of the embedded systems. The processors in the embedded systems typically do not have the bandwidth to process the incoming data fast enough and/or adequate memory (buffer structures) to store all the incoming data.

One treatment of this problem in the past has been to simply hope that the amount of broadcast data does not exceed the capacity of the processor. This has proven inadequate in networks with high surge of broadcast traffic or during "broadcast storms." Another known attempt to solve the problem of high broadcast traffic involves disabling the embedded system's capability to receive broadcast data. This, however, cannot be done dynamically and the embedded system typically must be reset. Also, in most off-the-shelf embedded systems, this method results in loss of current network state, such as connection to the network.

U.S. Patent No. 5,793,978 describes a router for routing packets to devices in a computer network. If a packet to be sent to the network is a broadcast message, it is placed on a separate broadcast transmit queue from non-broadcast messages.

WO 98/44686 relates to ATM switches in a telecommunications system for handling point-to-point and point-to-multipoint connections. The system of WO 98/44686 includes a buffer structure for storing cells in accordance with priority classes and determining the locations of the cells in the buffers. All input cells are received through a single channel.

HAUNG Y R ET AL: 'A high performance input access scheme for ATM Multicast switching', 1996, IEE International Conference on Communication (ICC) describes an ATM multicast switching device in which data from multicast and unicast queues is sent to an input access controller and then to a multicast packet switch.

### SUMMARY OF THE INVENTION

The present invention is defined in the appendant claims.

An embedded system includes a memory for storing data received from the communication network, and a controller for determining whether the data received from the communication network is broadcast data or non-broadcast data. A data controller is included in the system and has a first channel for storing the broadcast data received from the communication network in the memory, and a second channel for storing the non-broadcast data.

### DESCRIPTION OF THE DRAWINGS

FIGURE 1 is block diagram of an embedded system in accordance with an embodiment of the present invention;
FIG. 2 is a type of data packet that is received by the embedded system of FIG. 1;
FIG. 3 is a block diagram of a memory of the embedded system of FIG. 1, including buffers and corresponding pointers;
FIG. 4 is a simplified diagram showing various fields in the pointers in the memory of FIG. ; and,
FIG. 5 is an arrangement of FIGS. 5A and 5B; and,
FIGS. 5A and 5B are flowcharts illustrating a process in which data are stored in the memory of FIG. 3 by a DMA controller shown in FIG. 1.

### DETAILED DESCRIPTION OF THE INVENTION

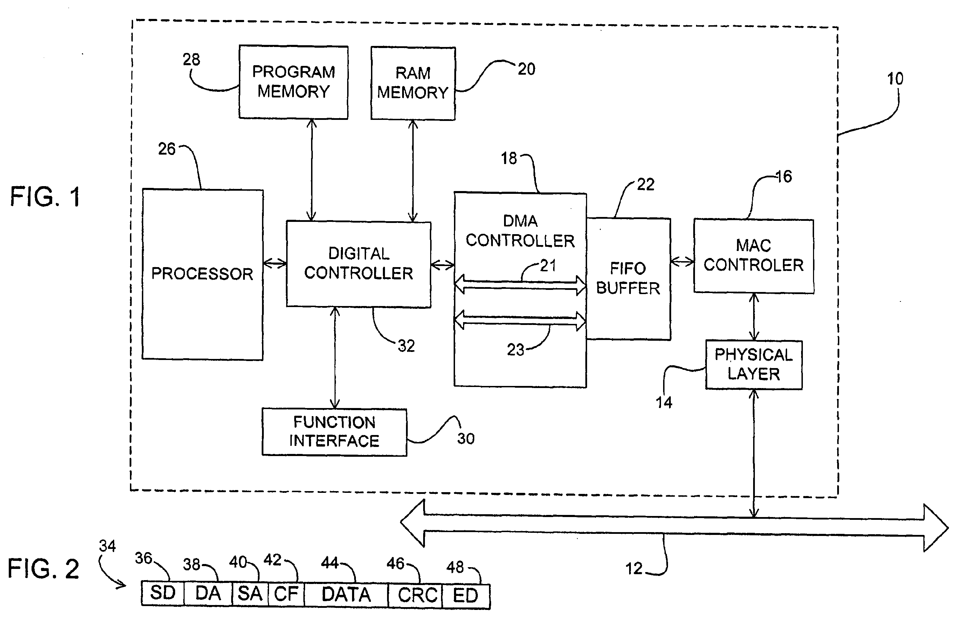

Turning now to FIG. 1, the embedded system in accordance with an embodiment of the present invention is indicated generally at 10, and is adapted to be connected to a communication network 12, which includes a combination of function media (such as the embedded system 10), infrastructure and other computing devices. The network 12, such as a local area network (LAN), a wide area network (WAN) or a personal area network (PAN), allows information to be generated and shared across the media. The embedded system 10 includes a physical layer 14 for encoding and decoding data transmitted to and received from the network 12 in various known methods. A media access controller (MAC) 16 is connected to the physical layer 14 and is responsible for controlling access between the embedded system 10 and the network 12, error checking and address filtering of data from the network. In accordance with the invention, the MAC 16 is also adapted to determine whether the incoming data is broadcast data or non-broadcast data. The MAC 16 also includes an address or a group of addresses, which is unique to the node or address of the embedded system 10, and filters out non-broadcast data that is not intended for the node of the embedded system.

The embedded system 10 also includes a multi-channel direct memory access (DMA) controller 18 for controlling transfer of data between a memory 20 of the embedded system and the network 12. In the preferred embodiment, the memory 20 is a random access memory (RAM). The DMA controller 18 includes a non-broadcast data receive channel 21 and a broadcast data receive channel 23 for respectively controlling transfer of non-broadcast data and broadcast data between the memory 20 and the network 12. A first in first out (FIFO) buffer 22 is provided between the DMA controller 18 and the MAC 16 for limited storage of incoming data from and outgoing data to the network 12.

Data from the network 12 is stored in the RAM memory 20, where it is accessible to a processor 26. Data from the processor 26 that is intended to be sent (transmitted) to the network 12 is also stored in the RAM memory 20 prior to being read by the DMA controller 18. The processor 26 is responsible for executing instructions that control the functions of the embedded system 10. Preferably, the instructions for the processor 26 are provided in a firmware stored in a program memory 28. The embedded system 10 also includes a function interface 30 for operatively connecting the embedded system 10 to other control systems, e.g., printing, scanning and communication interfaces to other network links such as LAN, WAN, etc. A digital controller 32 provides the means necessary for the various components (i.e., the DMA controller 18, the RAM memory 20, the processor 26, the program memory 28 and the function interface 30) of the embedded system 10 to operatively communicate with each other.

Referring to FIG. 2, data in the network 12, either broadcast or non-broadcast, is transmitted in a packet form. A data packet 34 includes predefined fields that provide pertinent information required by the network 12. Those in the art will recognize that the information contained in the data packet 34 is driven by the standard associated with the network 12 to which the embedded system 10 is interfaced. Examples of the standard include Ethernet, IEEE 802.11, IEEE 802.3, IEEE 802.4, IEEE 802.5 and BLUETOOTH, for example. The packet includes a start delimiter (SD) field 36 for indicating the beginning of the packet 34, and a destination address (DA) field 38 for indicating the intended recipient of the packet. The DA field 38 also indicates whether or not the packet 34 contains broadcast data, preferably by a special bit. It should be understood, however, that other fields within the packet 34 may also indicate whether the data that it is carrying is a broadcast or non-broadcast and through other means besides a special bit.

A source address (SA) field 40 provides the identification of the node from which the data packet 34 originated, a control field (CF) 42 describes the type of packet being sent, and often the length of the packet, and a data field 44 stores the data, either broadcast or non-broadcast, intended for the destination(s) of the packet 34. A cyclic redundancy checksum (CRC) field 46 provides information for determining whether an error has occurred in the data in the field 44 during transmission, and an end delimiter (ED) field 48 indicates the end point of the data packet 34.

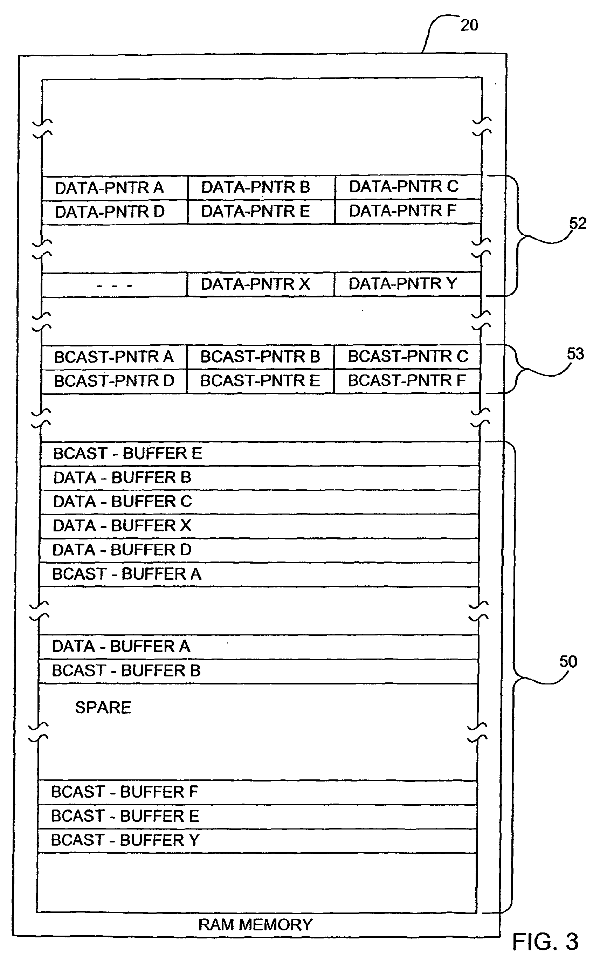

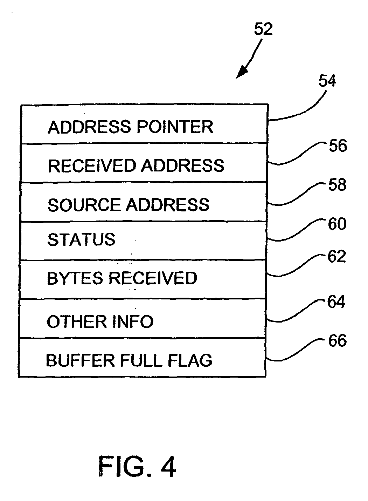

Turning now to FIGS. 3 and 4, the RAM memory 20 includes a plurality of buffers 50, each for storing data carried in a single data packet 34. Two or more buffers 50 may store data contained in a single data packet 34, however, if necessary, as those skilled in the art will recognize. Each buffer 50 is designated by the processor 26 to store either broadcast data or non-broadcast data.

The RAM memory 20 also includes a corresponding non-broadcast data pointer 52 for each buffer 50 designated to store non-broadcast data, and a corresponding broadcast data pointer 53 for each buffer 50 designated to store broadcast data. Both types of pointers 52, 53 (best shown in FIG. 4) includes an address pointer field 54 identifying its corresponding buffer 50, a received address field 56 identifying the destination address of the data carried in the data packet 34. A source address field 58 indicates the address from where the data originated. Optionally, status field 60 may indicate whether the data stored in the corresponding buffer 50 is a broadcast data or not. This field 60 can also be used for flagging errors, such as collision, CRC error, etc. A field 62 indicates the number of bytes of data stored in the corresponding buffer 50, and a field 64 is used for other information that may be of use to the embedded system designer, for example, storing network transport checksum. A field 66 includes a flag indicating whether the corresponding buffer 50 is storing data.

In operation, the data packet 34 from the network 12 is received by the MAC controller 16 after it has been appropriately processed (i.e., decoded) by the physical layer 14. The MAC controller 16 determines whether the packet contains broadcast data, usually from the DA field 38. The data contained in the data field 44 of the packet 34 is then forwarded to the FIFO buffer 22 along with an indication as to whether the received data is broadcast data or non-broadcast data.

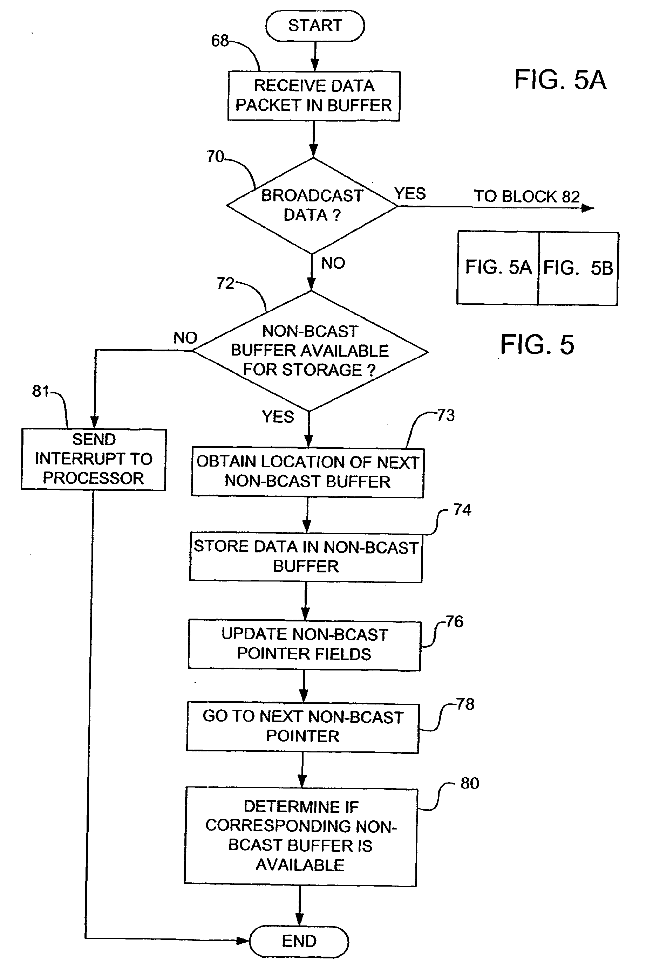

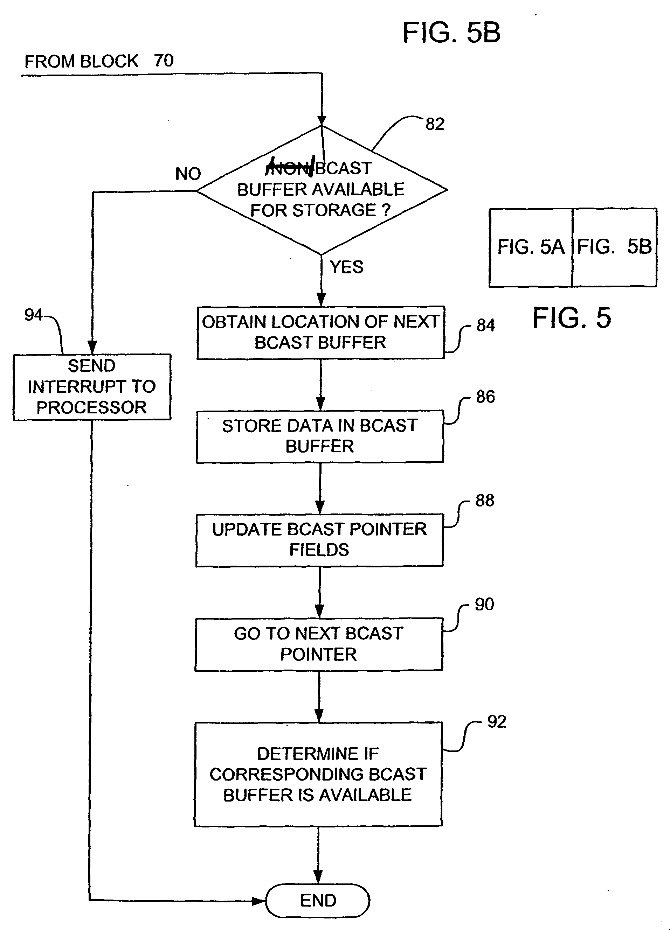

Turning now to FIGS. 5A and 5B, when data carried in the packet 34 is received in the FIFO buffer 22 (block 68), the DMA controller 18 first determines whether the data in the packet 34 is broadcast data or non-broadcast data (block 70). If the data received is non-broadcast data, the DMA controller 18 refers to the non-broadcast pointer 52 corresponding to the next available non-broadcast buffer 50 for the location of that buffer (block 73). The received data is stored in the next available non-broadcast buffer 50 in the RAM memory 20 via the non-broadcast data receive channel 21 (block 74), if a buffer is available at block 72.

Then, all the fields in the corresponding non-broadcast pointer 52 are updated by the processor 26 to reflect the information relating to the newly stored non-broadcast data (block 76). The DMA controller 18 then checks the next non-broadcast pointer 52 (block 78), and determines if its corresponding non-broadcast buffer 50 is available to store non-broadcast data (block 80). The DMA controller 18 checks the field 66 of the pointer 52 for a buffer full flag for this purpose.

Referring back to block 72, if no non-broadcast buffer 50 in the RAM memory 20 is available for storing data, the DMA controller 18 sends an interrupt to the processor 26 (block 81). In the preferred embodiment, the pointers 52 are accessed by the DMA controller 18 in a sequential order, and the data in the buffers 50 are processed by the processor 26 in that same order. Accordingly, once the last non-broadcast pointer 52 or buffer 50 in the RAM memory 20 has been accessed or processed, the first non-broadcast pointer and buffer become the next pointer and buffer.

If at block 70 the data received is broadcast data, the DMA controller 18 determines if a broadcast buffer 50 in the RAM memory 20 is available for storage (block 82). If so, the DMA controller 18 refers to the broadcast pointer 53 corresponding to the next available broadcast buffer 50 for the location of that buffer (block 84). The received broadcast data is stored in the next available broadcast buffer 50 via the broadcast data receive channel 23 (block 86).

Then, all the fields in the corresponding broadcast pointer 53 are updated by the processor 26 to reflect the information relating to the newly stored broadcast data (block 88). The DMA controller 18 then checks the next broadcast pointer 53 (block 90), and determines if its corresponding broadcast buffer 50 is available to store broadcast data (block 92). The DMA controller 18 checks the field 66 of the pointer 53 for a buffer full flag for this purpose.

Referring back to block 82, if no broadcast buffer 50 in the RAM memory 20 is available for storing data, the DMA controller 18 sends an interrupt to the processor 26 (block 94). In the preferred embodiment, the pointers 53 are also accessed by the DMA controller 18 in a sequential order, and the data in the buffers 50 are processed by the processor 26 in that same order. Accordingly, once the last pointer 53 or its corresponding buffer 50 in the RAM memory 20 has been accessed or processed, the first broadcast pointer 53 and buffer 50 become the next broadcast pointer and buffer.

Once data is stored in the memory 20, the processor 26 processes the stored data when it has the available bandwidth. In the preferred embodiment, the processor 26 gives priority to the processing of non-broadcast data, since it is typically associated with the particular function of the device. The broadcast data is processed after the non-broadcast data has been processed. Other processing orders, however, should be recognizable by those skilled in the art. When desirable, the processor 26 may vary the allocation of the buffers 50 for receiving broadcast and non-broadcast data. This generally depends on the amount of buffers 50 that are available and how busy the processor 26 is.

From the foregoing description, it should be understood that an improved embedded system has been shown and described which has many desirable attributes and advantages. The embedded system includes a DMA controller having a channel for receiving and storing non-broadcast data to the memory and a separate channel for receiving and storing broadcast data.

While various embodiments of the present invention have been shown and described, it should be understood that other modifications, substitutions and alternatives are apparent to one of ordinary skill in the art. Such modifications, substitutions and alternatives can be made without departing from the scope of the invention, as defined by the appended claims.

Various features of the invention are set forth in the appended claims.

## Claims

1. An embedded system (10) in a communication network (12), comprising:
a memory (20) for storing data received from the communication network (12);
means for (16) determining whether said data received from the communication network (12) is broadcast data or non-broadcast data;
a controller buffer (22) for queuing data received from the communication network (12) via said determining means (16); and,
a data controller (18) having a first channel (23) for storing said broadcast data from said controller buffer (22) in said memory (20), and a second channel (21) for storing said non-broadcast data from said controller buffer (22) in said memory.

2. The system (10) as defined in claim 1 wherein said memory (20) includes a plurality of buffers (50) designated for storing said non-broadcast data and a plurality of buffers (50) designated for storing broadcast data.

3. The system as defined in claim 2 further including a processor (26) for designating a predetermined number of said buffers (50) for storage of said non-broadcast data and a predetermined number of said buffers (50) for storage of said broadcast data.

4. The system as defined in claim 2 wherein said memory (20) includes a pointer (52, 53) corresponding to each of said non-broadcast data storing buffers and said broadcast data storing buffers.

5. The system as defined in claim 4 wherein said pointers (52, 53) includes a field for (60) indicating whether data stored in a corresponding one of said buffers is said broadcast data or said non-broadcast data, and a field (66) for indicating whether said corresponding buffer is full.

6. The system (10) as defined in claim 1 further including
a processor (26) for processing data stored in said buffers (50);
a program memory (28) for storing operating instructions for said processor (26); and,
a system controller (32) for providing communication between said processor (26), said program memory (28), said data memory (20) and said data controller (18).

7. The system (10) as defined in claim 6 further including:
a physical layer (14) interconnected between said determining means (16) and the communication network (12) for encoding and decoding data transmitted to and received from the communication network.

8. The system (10) as defined in claim 6 further including a function interface (30) connected to said system controller (32) for operatively connecting said embedded system to a network medium.

## Patentansprüche

1. Ein eingebettetes System (10) in einem Kommunikationsnetzwerk (12), das folgende Merkmale umfasst:
einen Speicher (20) zum Speichern von Daten, die von dem Kommunikationsnetzwerk (12) empfangen werden;
eine Einrichtung (16) zum Bestimmen, ob die Daten, die von dem Kommunikationsnetzwerk empfangen werden, Rundsendedaten oder Nicht-Rundsendedaten sind;
einen Steuerpuffer (22) zum Stellen von Daten, die von dem Kommunikationsnetzwerk (12) über die Bestimmungseinrichtung (16) empfangen werden, in eine Warteschlange; und
eine Datensteuerung (18) mit einem ersten Kanal (23) zum Speichern der Rundsendedaten von dem Steuerpuffer (22) in dem Speicher (20), und einem zweiten Kanal (21) zum Speichern der Nicht-Rundsendedaten von dem Steuerpuffer (22) in dem Speicher.

2. Das System (10) gemäß Anspruch 1, bei dem der Speicher (20) eine Mehrzahl von Puffern (50), die zum Speichern der Nicht-Rundsendedaten bestimmt sind, und eine Mehrzahl von Puffern (50) umfasst, die zum Speichern der Rundsendedaten bestimmt sind.

3. Das System gemäß Anspruch 2, das ferner einen Prozessor (26) zum Bestimmen einer vorbestimmten Anzahl der Puffer (50) für die Speicherung der Nicht-Ründsendedaten und einer vorbestimmten Anzahl der Puffer (50) für die Speicherung der Rundsendedaten umfasst.

4. Das System gemäß Anspruch 2, bei dem der Speicher (20) einen Zeiger (52, 53) umfasst, der jedem der Nicht-Rundsendedaten-Speicherpuffer und der Rundsendedaten-Speicherpuffer entspricht.

5. Das System gemäß Anspruch 4, bei dem die Zeiger (52, 53) ein Feld (60) zum Anzeigen, ob Daten, die in einem entsprechenden der Puffer gespeichert sind, die Rundsendedaten oder die Nicht-Rundsendedaten sind, und ein Feld (66) zum Anzeigen umfassen, ob der entsprechende Puffer voll ist.

6. Das System (10) gemäß Anspruch 1, das ferner folgende Merkmale umfasst:
einen Prozessor (26) zum Verarbeiten von Daten, die in den Puffern (50) gespeichert sind;
einen Programmspeicher (28) zum Speichern von Betriebsbefehlen für den Prozessor (26); und
eine Systemsteuerung (32) zum Liefern von Kommunikation zwischen dem Prozessor (26), dem Programmspeicher (28), dem Datenspeicher (20) und der Datensteuerung (18).

7. Das System (10) gemäß Anspruch 6, das ferner folgendes Merkmal umfasst:
eine physikalische Schicht (14), die zwischen der Bestimmungseinrichtung (16) und dem Kommunikationsnetzwerk (12) verbunden ist, zum Codieren und Decodieren von Daten, die an das Kommunikationsnetzwerk gesendet werden und von demselben empfangen werden.

8. Das System (10) gemäß Anspruch 6, das ferner eine Funktionsschnittstelle (30) umfasst, die mit der Systemsteuerung (32) verbunden ist, zum wirksamen Verbinden des eingebetteten Systems mit einem Netzwerkmedium.

## Revendications

1. Système intégré (10) dans un réseau de communication (12), comprenant :
une mémoire (20) pour stocker des données provenant du réseau de communication (12) ;
des moyens (16) pour déterminer si lesdites données provenant du réseau de communication (12) sont des données de radiodiffusion ou des données autres que de radiodiffusion ;
un tampon de contrôle (22) pour mettre en file d'attente les données provenant du réseau de communication (12) via lesdits moyens de détermination (16) ; et
un contrôleur de données (18) ayant un premier canal (23) pour stocker lesdites données de radiodiffusion provenant dudit tampon de contrôle (22) dans ladite mémoire (20), et un second canal (21) pour stocker lesdites données autres que de radiodiffusion provenant dudit tampon de contrôle (22) dans ladite mémoire.

2. Système (10) selon la revendication 1, dans lequel ladite mémoire (20) comprend une pluralité de tampons (50) conçus pour stocker lesdites données autres que de radiodiffusion et une pluralité de tampons (50) conçus pour stocker les données de radiodiffusion.

3. Système selon la revendication 2, comprenant en outre un processeur (26) pour attribuer un nombre prédéterminé desdits tampons (50) pour le stockage desdites données autres que de radiodiffusion et un nombre prédéterminé desdits tampons (50) pour le stockage desdites données de radiodiffusion.

4. Système selon la revendication 2, dans lequel ladite mémoire (20) comprend un pointeur (52, 53) correspondant à chacun desdits tampons de stockage de données autres que de radiodiffusion et desdits tampons de stockage de données de radiodiffusion.

5. Système selon la revendication 4, dans lequel lesdits pointeurs (52, 53) comprennent un champ (60) pour indiquer si les données stockées dans un tampon correspondant desdits tampons sont lesdites données de radiodiffusion ou lesdites données autres que de radiodiffusion, et un champ (66) pour indiquer si ledit tampon correspondant est plein.

6. Système (10) selon la revendication 1, comprenant en outre :
un processeur (26) pour traiter les données stockées dans lesdits tampons (50) ;
une mémoire de programme (28) pour stocker les instructions de fonctionnement pour ledit processeur (26); et
un contrôleur de système (32) pour assurer la communication entre ledit processeur (26), ladite mémoire de programme (28), ladite mémoire de données (20) et ledit contrôleur de données (18).

7. Système (10) selon la revendication 6, comprenant en outre :
une couche physique (14) interconnectée entre lesdits moyens de détermination (16) et le réseau de communication (12) pour coder et décoder les données transmises au réseau de communication et reçues de celui-ci.

8. Système (10) selon la revendication 6, comprenant en outre une interface de fonction (30) connectée audit contrôleur de système (32) pour connecter de façon opérationnelle ledit système intégré à un moyen de réseau.
